# EUROPEAN PATENT SPECIFICATION

(11) **EP 0 295 149 B1**
(45) Date of publication and mention of the grant of the patent: **24.02.1993**
(21) Application number: 88305382.9
(22) Date of filing: 13.06.1988
(51) Int. Cl.: B01D 35/26, A01K 63/04

(54) **Filtering device**
Filtereinrichtung
Dispositif de filtre

(30) Priority: 11.06.1987 JP 145889/87
(43) Date of publication of application: 14.12.1988
(73) Proprietor: SUISAKU KABUSHIKI KAISHA, Tokyo (JP)
(72) Inventor: Ogawa, Yonekichi, Tokyo (JP)
(74) Representative: Godsill, John Kenneth

(56) References cited:
- EP-A- 0 151 852
- EP-A- 0 212 975
- DE-A- 3 044 376
- DE-A- 3 136 243
- GB-A- 2 141 040
- US-A- 4 620 924
- PATENT ABSTRACTS OF JAPAN, vol. 11. no. 251 (C-440)(2698), 14.08.87; & JP-A- 62 57621 (SUISAKU), Cat. A, 13.03.87
- PATENT ABSTRACTS OF JAPAN, vol. 11, no. 229 (C-436)(2676), 25.07.87; & JP-A- 62 42710 (SUISAKU), Cat. A, 24.02.87

## Description

The present invention relates to a filtering device to be mounted in a water tank for use as an aquarium and more particularly, to a filtering device for filtering and purifying water in the tank using filtering material.

A hitherto known filtering device is generally constructed with a pump at the upper end of an upright suction pipe disposed in a water tank and water sucked up by the pump is filtered by allowing it to flow through filtering material located in the upper part of the water tank.

However, due to the fact that the pump and the filtering material are located in the upper part of the water tank the conventional filtering device has drawbacks that it does not present a pleasing appearance because a large part of the space in the upper portion of the tank is occupied by the pump and the filtering material, and a space required for mounting a fluorescent lamp and other like components is reduced. Another drawback of the conventional filtering arrangement is that it is relatively noisy due to the positioning of the pump.

German Patent Specification No. 3136243A discloses a filtering device comprising a tubular housing for attachment in a vertical position to a wall surface of a water tank, the housing having a filtering chamber therein, water intake ports and a water discharge port, which ports communicate with the filtering chamber, filtering material in the housing which divides the filtering material into an unpurified water chamber, with which the intake ports communicate, and a purified water chamber, the chambers being on opposite sides of the material, a suction pipe in the housing communicating with the purified water chamber and the discharge port, and a pump unit including a motor mounted on an upper portion of the housing so as to draw water through the suction pipe and to discharge it into the water tank through the discharge pipe.

The invention is concerned with the provision of an improved such device.

According to the present invention, there is provided a filtering device comprising an elongate housing for attachment in a vertical position to a wall surface of a water tank, the housing having a filtering chamber therein, a water intake port and a water discharge port, these intake and discharge ports communicating with the filtering chamber, a filtering material accommodated in the housing so as to divide the filtering chamber into an unpurified water chamber and a purified water chamber on opposite sides of the material, a suction pipe mounted in the housing and communicating with the purified water chamber and with the water discharge port, the water intake port communicating with the unpurified water chamber, and a pump unit including a motor mounted on an upper portion of the housing so as to draw water through the suction pipe and to discharge it into the water tank through the water discharge port, characterised in that the housing defines an auxiliary chamber in which a chamber accommodating the motor of the pump unit is positioned, the auxiliary chamber communicating with an auxiliary water intake port in the housing and with the unpurified water chamber to allow a flow of water from the auxiliary water intake port to the unpurified water chamber through the auxiliary chamber in operation of the device thereby to cool said chamber and the motor accommodated therein with water flowing through the auxiliary chamber.

Further according to an additional feature of the invention, the filter case is provided at one end with a partition wall to separate a water suction chamber from the filtering chamber which suction chamber communicates with the purified water chamber and with the suction pipe.

The intake port may be formed in a filter case forming part of the housing and the water discharge port formed in a separate casing for the pump unit, the filter case and pump unit casing being separably assembled and so constructed that in an assembled state one end of the suction pipe and the discharge port are connected together.

For a better understanding of the invention and to show how the same may be carried into effect reference will now be made to the following description in conjunction with the accompanying drawings which illustrate one embodiment of the present invention and in which:
FIGURE 1 is a perspective view illustrating a water tank to which a filtering device of the present invention is attached,
FIGURE 2 is a fragmental enlarged sectional view of the filtering device taken on the line II - II in Figure 1,
FIGURE 3 is a front view of the filtering device as viewed in the direction of an arrow III in Figure 2,
FIGURE 4 is a vertical sectional view of the filtering device taken on the line IV - IV in Figure 2,
FIGURE 5 is a fragmental sectional view of the filtering device taken on the line V - V in Figure 4,
FIGURE 6 is a sectional view of the filtering device taken on the line VI - VI in Figure 4,
FIGURE 7 is a sectional view of the filtering device taken on the line VII - VII in Figure 4,
FIGURE 8 is a sectional view of the filtering device taken on the line VIII - VIII in Figure 4,
FIGURE 9 is a perspective view of the upper part of a filter case shown in a disassembled state, and
FIGURE 10 is a sectional view of the filtering device taken on the line X - X in Figure 5.

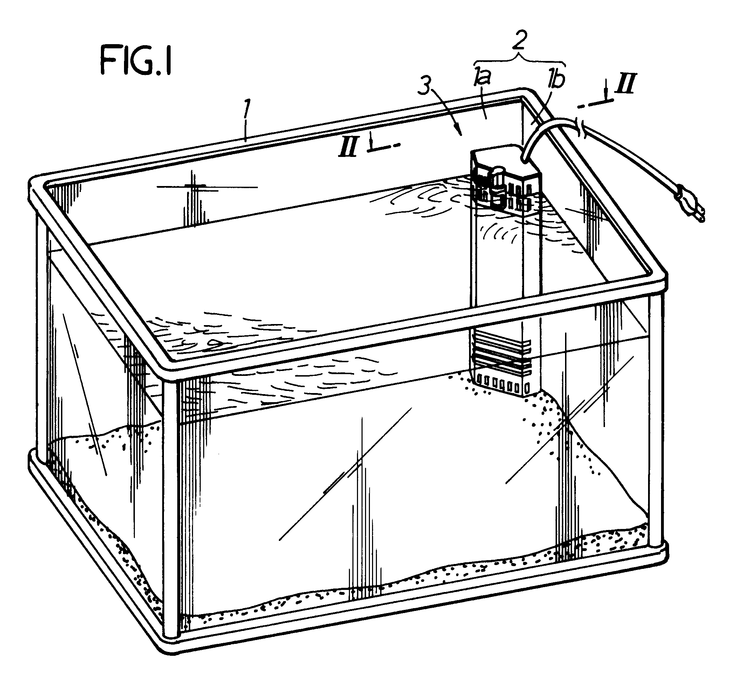

Referring first to Figure 1, a water tank 1 for cultivating aquarium fish such as goldfish, tropical fish, saltwater fish or the like is constructed in a box-like configuration and a filtering device 3 is attached to a corner section 2 which is defined by two wall surfaces 1a and 1b, intersecting at right angles, of the water tank 1.

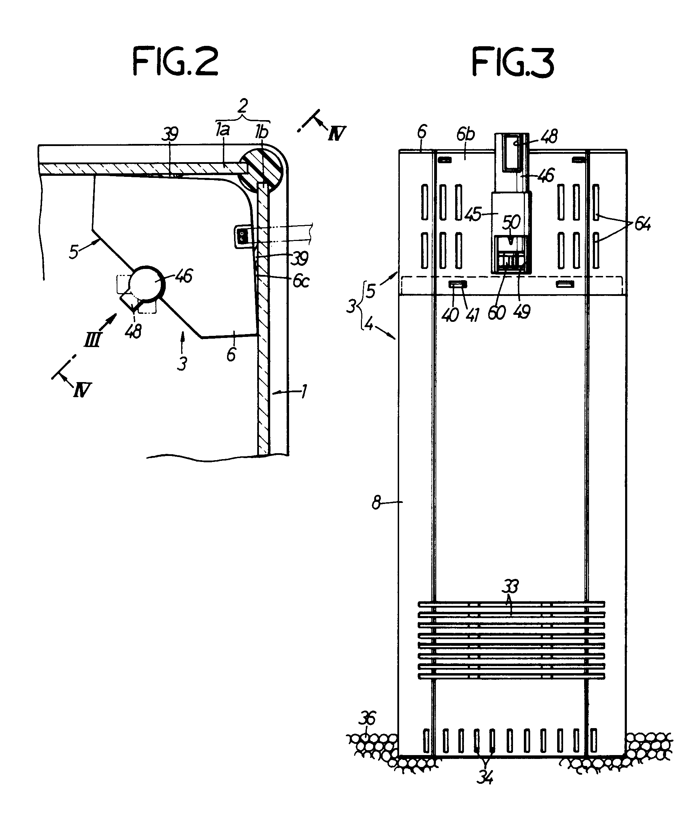

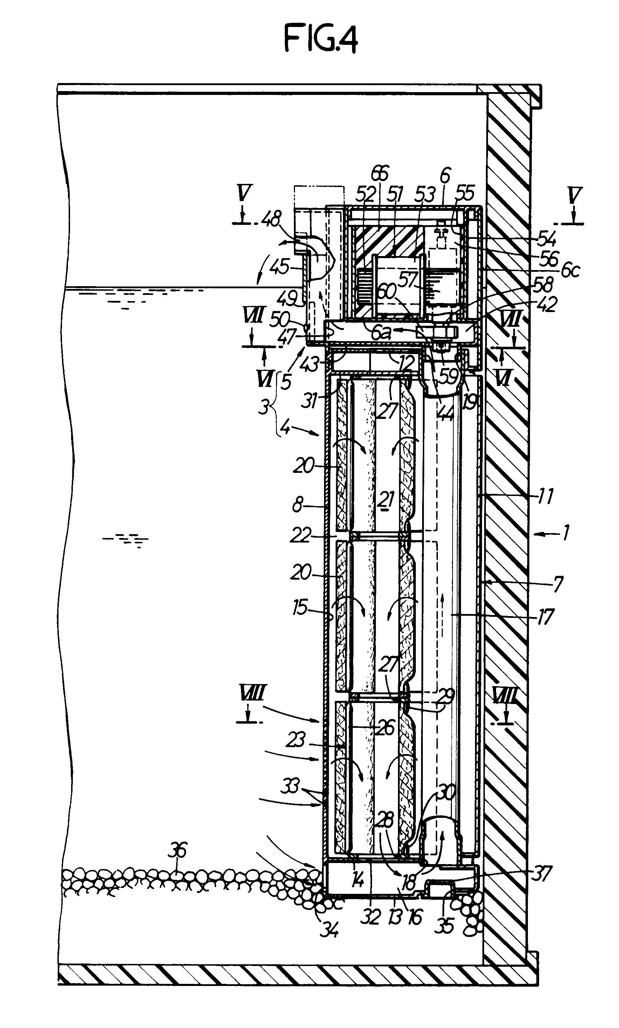

As shown in Figures 2, 3 and 4, a pump unit 5 is detachably fitted to the upper part of a filter case 4, both the filter case and a casing 6 for the pump unit 5 being made of synthetic resin and together forming an elongate housing.

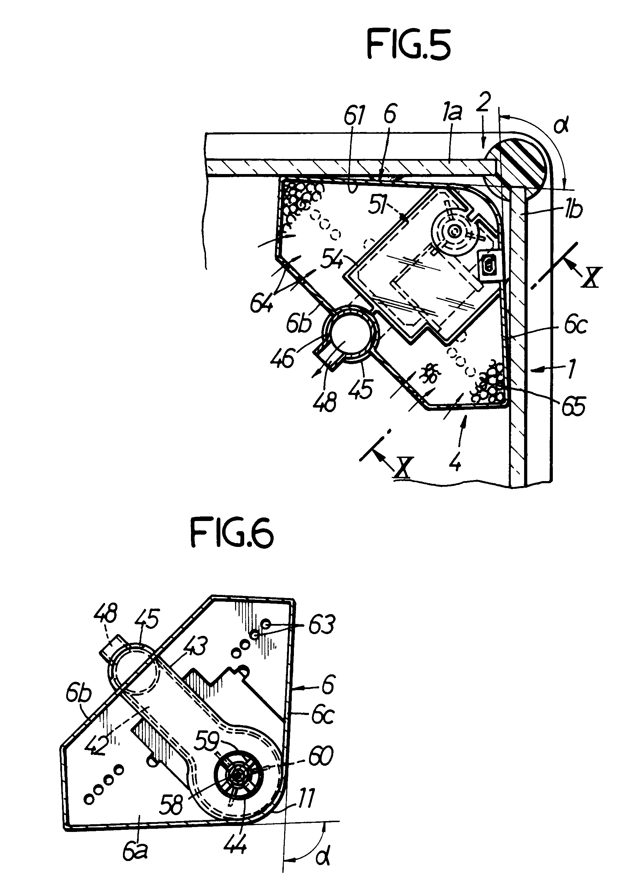

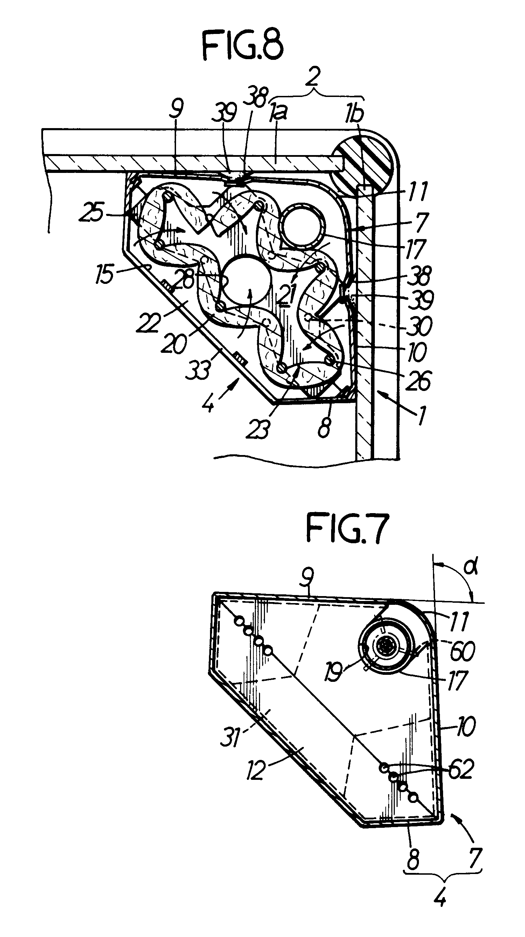

Referring to Figures 5, 6, 7 and 8, the filter case 4 comprises a back wall 7 facing into the corner section 2 and a front surface 8 facing into the tank 1 both of which are interconnected thereby to form a closed body as viewed in a horizontal section. The back wall 7 includes a pair of mounting portions 9 and 10 which are connected to one another by a connecting portion 11. Both the mounting portions 9 and 10 define an angle α which in a natural state of the portions 9 and 10 is, for instance, 95° which is slightly larger than the angle of 90° defined by both the wall surfaces 1a and 1b. The connecting portion 11 is shaped into a circular arc curved convexly towards the corner section 2. On the other hand, the front wall 8 is formed into a trapezoidal shape converging toward the inside of the water tank 1. The opposite side ends of the front wall 8 and the outer ends of the mounting portions 9 and 10 of the back wall 7 are fitted together to be interconnected.

The back wall 7 and the front wall 8 are integrally provided with plate portions at the upper ends thereof, which cooperate to form a top plate 12 when they are joined together. Similarly, the back wall 7 and the front wall 8 are integrally provided with plate portions at the lower ends thereof which cooperate to form a bottom plate 13 when they are joined together. Accordingly, when the filter case 4 is assembled by connecting the back wall 7 and the front wall 8 to each other, both the upper and lower ends of the filter case 4 are closed with the top plate 12 and the bottom plate 13, respectively. Further, the back wall 7 and the front wall 8 are integrally provided with plate portions at the lower ends thereof to cooperate to form a partition wall 14 when they are joined together. By the partition wall 14, the interior of the filter case 4 is divided into two parts, one of them being a filtering chamber 15 defined between the top plate 12 and the partition wall 14 and the other one being a water suction chamber 16 defined between the partition wall 14 and the bottom plate 13.

A vertically extending suction pipe 17 is fixedly disposed in the filter case 4 at a position located near the back wall 7 of the filter case 4. Specifically, the lower end of the suction pipe 17 is fitted into a hole 18 formed in the partition wall 14 so that the pipe 17 is connected to the water suction chamber 16, while the upper end of the suction pipe 17 is fitted into a hole 19 formed in the top plate 12 so that the pipe opens through the top plate 12.

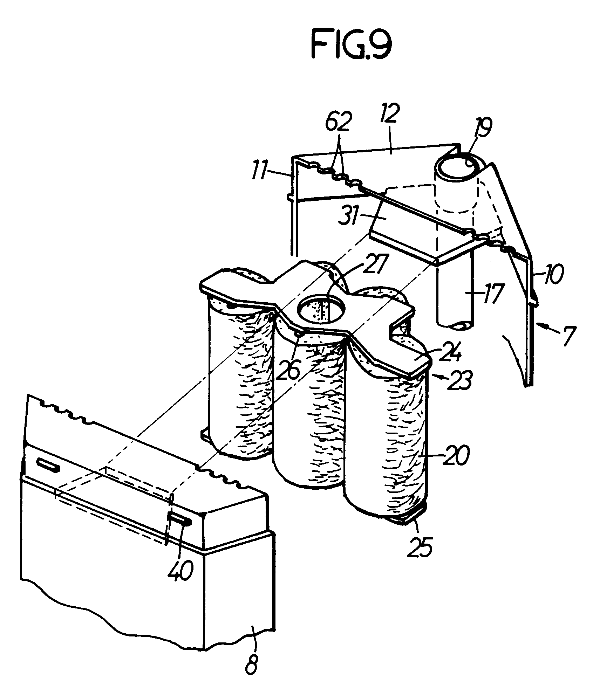

Referring additionally to Figure 9, three tubular lengths of filtering material 20 are arranged one above another in the filtering chamber 15 at a position located closer to the front wall 8 than the suction pipe 17 and the interior of the filtering chamber 15 is divided by the cooperation of adjacent lengths of filtering material into a purified water chamber 21 formed by the interior of the successive lengths of filtering material and an unpurified water chamber 22 around the filtering material 20.

Each of the lengths of filtering material 20 is previously formed into a rectangular mat-like shape, and it is fitted over a support frame 23 so as to have a tubular shape. The support frame 23 consists of a pair of support plates 24 and 25, one upper and one lower, connected to each other by a plurality of connecting rods 26, and both the support plates 24 and 25 are coaxially provided with communication holes 27 and 28. Further, the support plates 24 and 25 are formed with a plurality of engagement projections 29 and 30 on their opposed surfaces in such a manner that each of them is located between the adjacent connecting rods 26 and inwardly of the latter. Thus, the filtering material 20 is attached to the support frame 23 such that it is wound around the connecting rods 26 while being bent inwardly to be engaged with the projections 29 and 30 at positions between the adjacent connecting rods 26. The three lengths of filtering material 20 thus coaxially stacked one above another so as to have mutual communication through the communication holes 27 and 28, are clamped between a clamping plate 31 disposed at the upper end of the filter case 4 and the partition wall 14. It should be noted that the communication hole 27 on the uppermost support frame 23 is closed by the clamping plate 31 and the communication hole 28 on the lowermost support frame 23 connects with the water suction chamber 16 via an introduction hole 32 in the partition wall 14.

A plurality of slit-like water intake ports 33 are formed in the lower part of the front wall 8 of the filter case 4 with vertical spacings therebetween so as to communicate with the lower part of the unpurified water chamber 22. In addition, a plurality of auxiliary water intake ports 34 each in the form of a vertically extending slit are provided at the lower portion of the front wall 8 to communicate with the water suction chamber 16.

The bottom plate 13 of the filter case 4 is formed with a connection hole 35 at a position opposite the lower end of the suction pipe 17. To the connection hole 35, a so-called lower surface type filtering device may be connected if filtration is desired by using gravel 36 spread over the bottom of the water tank 1. If such lower surface type filtering device is not used, the connection hole 35 is closed with a cap 37.

Both the mounting portions 9 and 10 of the back wall 7 of the filter case 4 are provided at their outer surfaces with two pairs of recesses 38 with a vertical spacing between the pairs. A sucker 39 is secured to each of the recesses 38 in such a manner that its fore end projects outwardly of the outer surfaces of the mounting portions 9 and 10.

The casing 6 of the pump unit 5 is formed in a box-like configuration with its cross-section corresponding to that of the filter case 4. The casing 6 is fitted onto the upper portion of the filter case 4, and the former is united with the latter by the engagement of projections 40 on the upper portion of the filter case 4 in engagement holes 41 formed in the casing 6.

The casing is provided with a passage defining member 43 to form with a bottom plate 6a of the casing 6 a passage 42. The bottom plate 6a is integrally formed with a fitting sleeve 44 which is fitted into the upper end of the suction pipe 17 when the casing 6 is fitted onto the filter case 4. Consequently, the upper end of the suction pipe 17 communicates with the passage 42.

A vertically extending guide sleeve 45 with its lower end closed is made integral with a centre portion of a front wall 6b of the casing 6 which faces into the water tank 1. A discharge pipe 46 with its upper end closed is slidably fitted in the guide sleeve 45. The forward end of the passage 42 communicates with the guide sleeve 45 and the discharge pipe 46 is formed with a notch 47 on the lower side wall thereof through which the passage 42 communicates with the discharge pipe 46. Further, the discharge pipe 46 is formed with a water discharge port 48 at the upper end thereof which opens into the water tank 1. The position of the discharge pipe 46 can be adjusted as required by sliding the discharge pipe 46 in the guide sleeve 45. Also, the orientation of the water discharge port 48 in the horizontal plane can be adjusted within a certain angular range, for instance, 90°.

The guide sleeve 45 is formed at its lower end with an auxiliary rectangular water discharge port 49 which is aligned with the passage 42. In order to limit the vertical position of the discharge pipe 46 in the guide sleeve 45, the discharge pipe 46 is provided with a projection 50 which is engagable with the upper edge of the auxiliary discharge port 49.

The casing 6 has a motor 51 incorporated therein and a core 52 and a coil 53 for the motor 51 are disposed in a box-shaped accommodating chamber 55 which is defined by a wall 54 in the casing 6. Furthermore, the accommodating chamber 55 is provided with a vertically extending support sleeve 56 which is closed at its lower end save for an opening opposite the upper portion of the fitting sleeve 44 at one end of the passage 42, and a rotor 57 is rotatably disposed in the interior of the support sleeve 56. The upper end of a rotational shaft 58 made integral with the rotor 57 is rotatably supported by the upper closed end of the support sleeve 56, while the lower end of the rotational shaft 58 is rotatably supported by a bearing portion 59 which is provided at a junction between the fitting sleeve 44 and the bottom plate 6a. A plurality of blades 60 mounted on the shaft 58 are positioned in the passage 42 so that a flow of water may be generated in the suction pipe 17 to lead upwardly through the pipe and to the water discharge port 48 and the auxiliary water discharge port 49 in the passage 42 by the rotation of the blades 60.

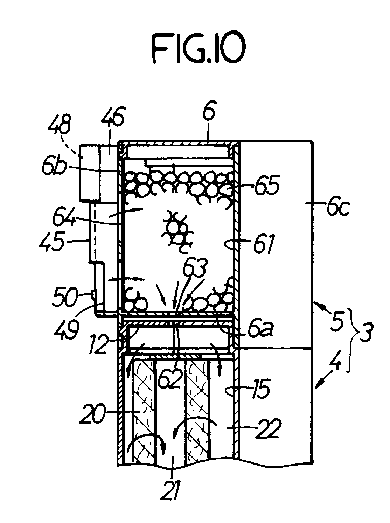

Referring additionally to Figure 10, an auxiliary filtering chamber 61 is defined in an area located outwardly of the wall 54 in the casing 6. In order to assure that the auxiliary filtering chamber 61 communicates with the unpurified chamber 22 in the filter case 4 when the casing 6 is united with the filter case 4, the top plate 12 of the filter case 4 and the bottom plate 6a of the casing 6 are formed with a plurality of holes 62 and 63 which correspond to, and communicate with, one another. Further, the front wall portion 6b of the casing 6 is formed with a plurality of auxiliary water intake ports 64 each in the form of a vertically extending slit which communicate with the auxiliary filtering chamber 61. Thus, when a downward flow of water is generated in the purified chamber 21, water is caused to flow through the auxiliary water intake ports 64 into the unpurified chamber 22 via the auxiliary filtering chamber 61 and the communicating holes 62 and 63. The auxiliary filtering chamber 61 is filled with gravel 65. In order to provide and maintain proper electric insulation of the core 52 and the coil 53, the accommodating chamber 55 is filled with an insulation material 66 such as synthetic resin or the like after the core 52 and the coil 53 have been placed therein. A pair of suckers 39 are fixedly attached to each of the back wall portions 6c of the casing 6 facing the corner section 2 in the same way as the filter case 4.

Next, the operation of the filtering device as constructed in accordance with this embodiment will be described.

In attaching the filtering device 3 to the water tank 1, both the back wall 7 and the back wall portions 6c are faced into the corner section 2 so that the water discharge port 48 is located in the proximity of the level of water in the water tank 1. In this position, the one mounting portion 9 is pushed against the one wall surface 1a so that the suckers 39 are attached to the wall surface 1a. Next, the other mounting portion 10 is pushed against the other wall surface 1b so that the suckers 39 are likewise attached to the wall surface 1b. At this moment, both the mounting portions 9 and 10 define in a natural state an angle α larger than an angle defined by both the wall surfaces 1a and 1b. Owing to this, the connecting portion 11 end of the one mounting portion 9 is spaced away from the wall surface 1a while the front wall end of the same portion is thrust against the wall surface 1a. Thus, closed spaces between the suckers 39 on the mounting portion 9 and the wall surface 1a are depressurized, resulting in an increase in the adhesive force produced by the suckers 39 being increased.

When the mounting portion 10 is released from the wall 16, the front wall 8 of the mounting portion 10 moves away from the wall surface 1b under the influence of the adhesive force produced by the suckers 39 on the mounting portion 9. Thus, closed spaces between the suckers 39 and the wall surface 1b are depressurized, resulting in an increase in the adhesive force produced by the suckers 39 being increased in the same way as mentioned above. Consequently, the mounting portion 10 becomes attached to the wall surface 1b reliably. With the case attached to the tank in this way, the water intake ports 33 are located above the gravel 36, the auxiliary water discharge port 49 is located below the level of water and the water discharge port 48 is located above the level of water.

In this state, the end parts of the back wall 7 and the back wall portions 6c at the side of the front wall 8 are brought in close contact with both the wall surfaces 1a and 1b, resulting in a space between the filtering device 3 and the corner section 2 being closed. Accordingly, fish are prevented from being trapped between the filtering device 3 and the water tank 1.

When the motor 51 is operated after fitting of the filtering device, water is caused to flow from the purified water chamber 21 into the water suction chamber 16, and via the suction pipe 17 and the passage 42 to the water discharge port 48 and the auxiliary water discharge port 49 of the discharge pipe 46. Thus, water introduced into the unpurified water chamber 22 through the water intake ports 33 is purified as it passes through the filtering material 20 before flowing back into the tank 1 through the water discharge port 48 or the auxiliary water discharge port 49. At the same time, a small amount of water which is purified by the gravel 65 in the auxiliary filter chamber 61 enters the purified water chamber 22. Further, a small amount of water is introduced into the water suction chamber 16 through the auxiliary water intake ports 34. The speed of water flowing through the filtering material 20 is adjusted to a suitable value for promoting growth of chlorella or aerobic micro-organism, so that organic substances such as leftover food and excreta from the fish in the aquarium can be decomposed by the aerobic microbes to prevent clogging of the filtering material 20. In addition, it is possible to provide chlorella or the like as food for the fish.

Since the position of the discharge pipe 46 can be vertically adjusted, a ratio of amount of water to be discharged from the auxiliary water discharge port 49 to the amount of water discharged from the water discharge port 48 can be adjusted adequately by properly setting the vertical position of the water discharge port 48. For instance, by discharging water from the discharge port 48, the amount of oxygen dissolved in water can be increased. However, aquatic plants are placed in the tank, there is no need to improve the dissolution of oxygen in the water by causing the circulated water to fall onto the surface of the water. In this case, the flow of water back into the tank may be through the auxiliary water discharge port 49. By doing this, the sound of water falling onto the surface of the water in the tank can be eliminated. Furthermore, by turning the water discharge pipe 46 in the guide sleeve 45 either way, the orientation of the water discharging from the port 48 can be varied within a certain angular range, for instance, 90°, whereby the flow of water in the water tank 1 can be adjusted suitably.

Since the core 52 and the coil 53 of the motor 51, the rotor 57 and the like may be located below the water level, sound generated by operation of the motor 51 can be reduced substantially. In addition, it is possible to cool the heated motor 51 with water flowing through the auxiliary filtering chamber 61. Further, by pulling the discharge pipe 46 upwardly to open fully the auxiliary discharge port 49, the blades 60 located at the farthest position in the passage 42 can be easily inspected.

Since the filtering device 3 is so constructed that the pump unit 5 is mounted in the upper part of the filter case 4, it can be arranged in a compact structure in the water tank 1 and ample space can be left above the device 3. This arrangement allows for easier mounting of a fluorescent lamp or like component in the upper part of the water tank 1. Further, the level of noise can be reduced by damping the sound produced by the operation of the motor 51 in the water tank 1.

In the foregoing embodiment, the pump unit is mounted in the upper part of the filter case. However, even if the pump unit is alternatively mounted in the lower part of the filter case, the same advantageous effects as in the foregoing embodiment can be obtained.

## Claims

1. A filtering device comprising an elongate housing for attachment in a vertical position to a wall surface (1a, 1b) of a water tank (1), the housing having a filtering chamber (15) therein, a water intake port (33) and a water discharge port (48; 49), these intake and discharge ports (33 and 48;49) communicating with the filtering chamber (15), a filtering material (20) accommodated in the housing so as to divide the filtering chamber (15) into an unpurified water chamber (22) and a purified water chamber (21) on opposite sides of the material (20), a suction pipe (17) mounted in the housing and communicating with the purified water chamber (21) and with the water discharge port (48;49), the water intake port (33) communicating with the unpurified water chamber (22), and a pump unit (5) including a motor (51) mounted on an upper portion of the housing so as to draw water through the suction pipe (17) and to discharge it into the water tank (1) through the water discharge port (48;49), characterised in that the housing defines an auxiliary chamber (61) in which a chamber (55) accommodating the motor (51) of said pump unit (5) is positioned, the auxiliary chamber (61) communicating with an auxiliary water intake port (64) in the housing and with the unpurified water chamber (22) to allow a flow of water from the auxiliary water intake port (64) to the unpurified water chamber (22) through the auxiliary chamber (61) in operation of the device thereby to cool said chamber (55) and the motor (51) accommodated therein with water flowing through the auxiliary chamber (61).

2. The filtering device of claim 1, characterized in that the suction pipe (17) communicates with the end of the purified chamber (21) remote from the discharge port (48;49).

3. The filtering device of claim 1 or 2, characterized in that the housing is provided at one end with a partition wall (14) to separate a water suction chamber (16) from the filtering chamber (15), the chamber (16) communicating with the purified water chamber (21) and with the suction pipe (17).

4. The filtering device of claim 1, 2 or 3, characterized in that the housing comprises a filter case (4) having the filtering chamber (15) defined therein and a casing (6) which accommodates the pump unit (5).

5. The filtering device of claim 4, characterised in that the water intake port (33) is formed in the filter case (4) and the water discharge port (48;49) is formed in the casing (6) for the pump unit, the filter case (4) and the casing (6) being separably assembled with each other and so constructed that in an assembled state thereof one end of the suction pipe (17) and the water discharge port (48;49) are connected together.

6. The filtering device of claim 5, characterised in that the auxiliary water intake port (64) and the auxiliary chamber (61) are formed in the casing (6) for the pump unit and in an assembled state of the casing (6) and the filter case (4) the auxiliary chamber (61) connects with the unpurified water chamber (22) in the filter case (4).

7. The filtering device of any one of claims 1 to 6, characterized in that the auxiliary chamber (61) contains a filtering material (65).

8. The filtering device of claim 7, characterized in that the filtering material is gravel (65).

## Patentansprüche

1. Eine Filtereinrichtung mit einem langgestreckten Gehäuse zur Befestigung in einer vertikalen Stellung an einer Wandfläche (1a,1b) eines Wasserbehälters (1), wobei das Gehäuse einen Filterraum (15) enthält, mit einer Wassereinlaßöffnung (33) und einer Wasserauslaßöffnung (48;49), wobei diese Einlaß- und Auslaßöffnungen (33 und 48; 49) mit dem Filterraum (15) in Verbindung stehen, mit einem Filtermaterial (20), das im Gehäuse untergebracht ist, so daß es den Filterraum (15) in einen Raum (22) für ungereinigtes Wasser und einen Raum (21) für gereinigtes Wasser an entgegengesetzten Seiten des Materials (20) aufteilt, mit einem Ansaugrohr (17), das im Gehäuse angebracht ist und mit dem Raum (21) für gereinigtes Wasser und mit der Wasserauslaßöffnung (48; 49) in Verbindung steht, wobei die Wassereinlaßöffnung (33) mit dem Raum (22) für ungereinigtes Wasser in Verbindung steht, und mit einer Pumpeneinheit (5), die einen Motor (51) umfaßt, der an einem oberen Teil des Gehäuses angebracht ist, um Wasser durch das Ansaugrohr (17) anzusaugen und durch die Wasserauslaßöffnung (48; 49) in den Wasserbehälter (1) abzugeben, dadurch gekennzeichnet, daß das Gehäuse einen Zusatzraum (61) definiert, in dem ein den Motor (51) der Pumpeneinheit (5) aufnehmender Raum (55) angeordnet ist, wobei der Zusatzraum (61) mit einer zusätzlichen Wassereinlaßöffnung (64) im Gehäuse und mit dem Raum (22) für ungereinigtes Wasser in Verbindung steht, um eine Wasserströmung von der zusätzlichen Wassereinlaßöffnung (64) durch den Zusatzraum (61) zum Raum (22) für ungereinigtes Wasser im Betrieb der Einrichtung zu ermöglichen und dadurch den Raum (55) und den darin untergebrachten Motor (51) mit Wasser zu kühlen, das durch den Zusatzraum (61) strömt.

2. Die Filtereinrichtung nach Anspruch 1, dadurch gekennzeichnet, daß das Ansaugrohr (17) mit dem von der Auslaßöffnung (48;49) entfernten Ende des Raums (21) für gereinigtes Wasser in Verbindung steht.

3. Die Filtereinrichtung nach Anspruch 1 oder 2, dadurch gekennzeichnet, daß das Gehäuse an einem Ende mit einer Trennwand (14) zum Abtrennen eines Wasseransaugraums (16) vom Filterraum (15) versehen ist, wobei der Raum (16) mit dem Raum (21) für gereinigtes Wasser und mit dem Ansaugrohr (17) in Verbindung steht.

4. Die Filtereinrichtung nach Anspruch 1, 2 oder 3, dadurch gekennzeichnet, daß das Gehäuse ein Filtergehäuse (4) mit dem darin abgegrenzten Filterraum (15) und ein Gehäuse (6) umfaßt, das die Pumpeneinheit (5) aufnimmt.

5. Die Filtereinrichtung nach Anspruch 4, dadurch gekennzeichnet, daß die Wassereinlaßöffnung (33) im Filtergehäuse (4) ausgebildet ist und die Wasserauslaßöffnung (48; 49) im Gehäuse (6) für die Pumpeneinheit ausgebildet ist, wobei das Filtergehäuse (4) und das Gehäuse (6) trennbar zusammengesetzt und so konstruiert sind, daß in ihrem zusammengesetzten Zustand ein Ende des Ansaugrohres (17) und die Wasserauslaßöffnung (48; 49) miteinander verbunden sind.

6. Die Filtereinrichtung nach Anspruch 5, dadurch gekennzeichnet, daß die zusätzliche Wassereinlaßöffnung (64) und der Zusatzraum (61) im Gehäuse (6) für die Pumpeneinheit ausgebildet sind und der Zusatzraum (61) dann, wenn das Gehäuse (6) und das Filtergehäuse (4) sich im zusammengesetzten Zustand befinden, mit dem Raum (22) für ungereinigtes Wasser im Filtergehäuse (4) in Verbindung steht.

7. Die Filtereinrichtung nach einem der Ansprüche 1 bis 6, dadurch gekennzeichnet, daß der Zusatzraum (61) ein Filtermaterial (65) enthält.

8. Die Filtereinrichtung nach Anspruch 7, dadurch gekennzeichnet, daß das Filtermaterial Kies (65) ist.

## Revendications

1. Dispositif filtrant constitué d'une enceinte allongée à fixer en position verticale à la surface (1a, 1b) de la paroi d'un réservoir à eau (1), enceinte qui contient une chambre de filtration (15), un orifice d'admission d'eau (33) et un orifice d'évacuation d'eau (48 ; 49), ces orifices d'admission et d'évacuation (33 et 48 ; 49) communiquant avec la chambre de filtration (15), un matériau filtrant (20) placé dans l'enceinte pour diviser la chambre de filtration (15) en une chambre pour l'eau non purifiée (22) et une chambre pour l'eau purifiée (21) sur les côtés opposés du matériau (20), un tuyau d'aspiration (17) installé dans l'enceinte qui communique avec la chambre pour l'eau purifiée (21) et avec l'orifice d'évacuation d'eau (48 ; 49), l'orifice d'admission d'eau (33) communiquant avec la chambre pour l'eau non purifiée (22), et une unité de pompage (5) comportant un moteur (51) fixé sur une partie supérieure de l'enceinte de façon à faire passer l'eau dans le tuyau d'aspiration (17) et l'évacuer dans le réservoir à eau (1) par l'orifice d'évacuation d'eau (48 ; 49), **caractérisé** en ce que l'enceinte définit une chambre auxiliaire (61) dans laquelle se trouve une chambre (55) logeant le moteur (51) de ladite unité de pompage (5), chambre auxiliaire (61) qui communique avec un orifice auxiliaire (64) d'admission d'eau dans l'enceinte et avec la chambre (22) pour l'eau non purifiée pour permettre un écoulement d'eau depuis l'orifice auxiliaire (64) d'admission d'eau jusqu'à la chambre (22) pour l'eau non purifiée en passant par la chambre auxiliaire (61) lors du fonctionnement du dispositif afin de refroidir par là ladite chambre (55) et le moteur (51) qui y est logé grâce à l'eau qui traverse la chambre auxiliaire (61).

2. Dispositif filtrant selon la revendication 1, **caractérisé** en ce que le tuyau d'aspiration (17) communique avec l'extrémité de la chambre pour eau purifiée (21) loin de l'orifice d'évacuation (48 ; 49).

3. Dispositif filtrant selon la revendication 1 ou 2, **caractérisé** en ce que l'enceinte est munie en une extrémité d'une paroi de séparation (14) pour séparer une chambre d'aspiration d'eau (16) de la chambre de filtration (15), la chambre (16) communiquant avec la chambre pour l'eau purifiée (21) et avec le tuyau d'aspiration (17).

4. Dispositif filtrant selon la revendication 1, 2 ou 3, **caractérisé** en ce que l'enceinte consiste en un boîtier de filtre (4) dans lequel est définie la chambre de filtration (15) et un boîtier (6) qui loge l'unité de pompage (5).

5. Dispositif filtrant selon la revendication 4, **caractérisé** en ce que l'orifice d'admission d'eau (33) est formé dans le boîtier de filtre (4) et l'orifice d'évacuation d'eau (48 ; 49) est formé dans le boîtier (6) pour l'unité de pompage, le boîtier de filtre (4) et le boîtier (6) étant montés ensemble de façon séparable et construits de telle sorte que, dans l'état assemblé, une extrémité du tuyau d'aspiration (17) et l'orifice d'évacuation d'eau (48 ; 49) soient liés ensemble.

6. Dispositif filtrant selon la revendication 5, **caractérisé** en ce que l'orifice auxiliaire d'admission d'eau (64) et la chambre auxiliaire (61) sont formés dans le boîtier (6) pour l'unité de pompage et, dans l'état assemblé du boîtier (6) et du boîtier de filtre (4), la chambre auxiliaire (61) communique avec la chambre pour l'eau non purifiée (22) dans le boîtier de filtre (4).

7. Dispositif filtrant selon l'une quelconque des revendications 1 à 6, **caractérisé** en ce que la chambre auxiliaire (61) contient un matériau filtrant (65).

8. Dispositif filtrant selon la revendication 7, **caractérisé** en ce que le matériau filtrant (65) est du gravier.
